(19) Europäisches Patentamt
European Patent Office
Office européen des brevets

(11) Veröffentlichungsnummer: **0 020 922**
**A1**

# (12) EUROPÄISCHE PATENTANMELDUNG

(21) Anmeldenummer: **80102193.2**

(22) Anmeldetag: **23.04.80**

(51) Int. Cl.³: **C 08 K 5/00**, C 08 F 4/00, C 09 B 67/42

(30) Priorität: **11.05.79 DE 2919094**

(43) Veröffentlichungstag der Anmeldung: **07.01.81 Patentblatt 81/1**

(84) Benannte Vertragsstaaten: **AT FR GB IT NL**

(71) Anmelder: **SIEMENS AKTIENGESELLSCHAFT Berlin und München, Postfach 22 02 61, D-8000 München 22 (DE)**

(72) Erfinder: **Quella, Ferdinand, Dr., Parkstrasse 9, D-8035 Gauting (DE)**
Erfinder: **Pape, Heinz, Dipl.-Phys., Forstenrieder-Allee 17, D-8000 München 71 (DE)**

## (54) Verfahren zur Erhöhung der Stabilität von oxidationsempfindlichen organischen Zusatzstoffen, insbesondere von Fluoreszenzfarbstoffen, in radikalischen polymerisierbaren Systemen, wie Glessmassen oder Giessharzen.

(57) Die Erfindung betrifft ein Verfahren zur Erhöhung der Stabilität von oxidationsempfindlichen organischen Zusatzstoffen, wie polaren Lösungsmitteln, nichtionogenen Seifen, Weichmachern, insbesondere aber von Fluoreszenzfarbstoffen, in radikalisch polymerisierbaren Systemen wie Giessmassen oder Giessharzen, bei deren Polymerisation und gegen äussere Einflüsse wie Licht- und Wärmeeinwirkung sowie gegen Oxidation im polymerisierten Zustand.

Dabei wird zur Polymerisation ein nicht-peroxidischer, C-C-labiler Initiator verwendet.

Das Verfahren wird verwendet für Fluoreszenzfarbstoffe bei fluoreszenzaktivierten Displays (FLAD) und bei Sonnenkollektoren.

EP 0 020 922 A1

SIEMENS AKTIENGESELLSCHAFT
Berlin und München

Unser Zeichen
VPA 79 P 7064

Verfahren zur Erhöhung der Stabilität von oxidationsempfindlichen organischen Zusatzstoffen, insbesondere von Fluoreszenzfarbstoffen, in radikalisch polymerisierbaren Systemen wie Gießmassen oder Gießharzen.

Die Patentanmeldung betrifft ein Verfahren zur Erhöhung der Stabilität von oxidationsempfindlichen, organischen Zusatzstoffen, wie polaren Lösungsmitteln, nichtionogenen Seifen, Weichmachern, insbesondere aber von Fluoreszenzfarbstoffen, in radikalisch polymerisierbaren Systemen wie Gießmassen oder Gießharzen, bei deren Polymerisation und gegen äußere Einflüsse wie Licht- und Wärmeeinwirkung sowie Oxidation im polymerisierten Zustand.

Unter Gießharzen werden im folgenden radikalisch vernetzend polymerisierbare Systeme, wie z.B. ungesättigte Polyester(UP-)-Harze und Silikonharze ohne Füllstoffe verstanden. Als Gießmassen werden im folgenden radikalisch unvernetzend polymerisierbare Systeme wie z.B. PMMA(Polymethylmethacrylat-)-Gießmassen und Styrol-Gießmassen verstanden, d.h. Mischungen oder Lösungen von bereits

10.5.1979 / Edt 1 Lk

auspolymerisierten Polymeren mit Monomeren ohne Füllstoffe.

Gießmassen und Gießharze werden im allgemeinen radikalisch mit Peroxiden (s. Römpp, Chemielexikon (1973), Seite 342) oder Azoverbindungen durch Einwirkung von Wärme oder in Gegenwart zusätzlicher Beschleuniger kalt (Raumtemperatur) polymerisiert. Den Azoverbindungen kommt dabei die geringere Bedeutung zu, da sie zur Blasenbildung führen können. In manchen Fällen erfolgt die Polymerisationsauslösung auch durch UV- oder Röntgenstrahlen.

Im allgemeinen werden Gießharze und Gießmassen zum Einbetten elektrischer oder mechanischer Bauteile verwendet. Hierbei werden häufig anorganische Füllstoffe (z.B. Calciumcarbonat) zugesetzt. Für die Einfärbungen werden anorganische oder organische Pigmente und Farbstoffe eingesetzt, bei denen es nicht auf eine besondere optische Transparenz ankommt. Häufig weisen die Gießharze und Gießmassen bereits im Anlieferungszustand eine gelbliche Verfärbung auf.

Für optische Zwecke werden jedoch Massen mit hoher Lichtdurchlässigkeit (ungefähr 90% im Bereich zwischen 400nm bis 700nm) benötigt. Diese Massen lassen sich peroxidisch im allgemeinen ohne Änderung der Lichtdurchlässigkeit polymerisieren. Probleme treten jedoch dann auf, wenn den Massen Farbstoffe zugemischt werden. Vor allem dann, wenn die Farbstoffe in geringer Konzentration eingesetzt werden, tritt bei vielen Farbstoffen bereits während der peroxidisch ausgelösten Polymerisation eine Schädigung und nach der Polymerisation durch Peroxidreste in Gegenwart von Sonnenlicht eine vollständige Zerstörung des Farbstoffes ein. Beispiele sind hierfür Fluoreszenzfarb-stoffe, deren Konzentration so gering gewählt werden muß, daß noch keine Selbstlöschung der Fluoreszenz auftritt. Anwendungsmöglichkeiten für die Fluoreszenzfarbstoffe sind z.B. bei fluoreszenzaktivierten Displays (FLAD) und bei Sonnenkollektoren gegeben.

Aber auch dann, wenn die Farbstoffkonzentration hoch genug gewählt werden kann, bewirken Reaktionsprodukte des Farbstoffs mit dem Peroxid häufig eine Erniedrigung der Lichtdurchlässigkeit. Dies kann z.B. bei gegossenen Farbfiltern eine Rolle spielen.

In manchen Fällen müssen den Farbstoffen polare Lösungsmittel oder Seifen zugesetzt werden. Dies ist dann notwendig, wenn ein Farbsalz, z.B. Rhodamin-6G-Perchlorat mit dem Kunststoff allein nicht verträglich ist, oder, wenn bei einem Fluoreszenzfarbstoff durch eine polare Umgebung eine Bandentrennung erzielt werden soll. Einige dieser, als Lösungsmittel dienenden Zusatzstoffe, vor allem solche mit Äthergruppen, beispielsweise Polyglykole reagieren ebenfalls mit den Peroxiden während oder nach der Polymerisation und führen zu einer unerwünschten Gelbfärbung des Gießlings.

Aber auch ohne Farbstoffe ist eine Zugabe von Zusatzstoffen manchmal notwendig. Da gegossene Teile sehr spröde sind, läßt sich ihre Biegsamkeit durch Zugabe von Weichmachern verbessern. Im Falle von Lichtleitern darf dabei ebenfalls keine Vergilbung und die damit verbundene Abnahme der Lichtdurchlässigkeit auftreten.

Die Aufgabe, die der vorliegenden Erfindung zugrundeliegt, besteht in der Herstellung von Polymerisationssystemen, bei denen während und nach der Polymerisation

a) keine Veränderung oder Schädigung des Farbstoffzusatzes und/oder

b) keine unkontrollierte Reaktion der Lösungsmittel der als Komplexbildner zugesetzten Seifen mit den Polymerisationsprodukten und/oder

c) keine Beeinflussung der Weichmacher in bezug auf ihre mechanischen Eigenschaften am fertigen Produkt

auftreten können. Insbesondere soll aber die Lebensdauer von organischen Farbstoffen in den Gießharzen oder Gießmassen verbessert werden.

Die erfindungsgemäße Aufgabe wird durch ein Verfahren der eingangs genannten Art dadurch gelöst, daß zur Polymerisation ein nicht-peroxidischer, C-C-labiler Initiator verwendet wird. Durch diesen Initiator, der im Gegensatz zu den aus dem Stand der Technik bekannten Peroxiden sicherheitstechnisch unproblematisch ist und im Gegensatz zu den Azoverbindungen keine leichtflüchtigen Substanzen freisetzt, werden aufgrund des hohen sterischen Druckes der raumfüllenden Substituenten auf die zentrale C-C-Bindung beim Erwärmen endotherm Radikale abgespalten, durch welche durch Addition dieser Radikale oder eines Fragmentradikals an die ungesättigte Verbindung die Polymerisation initiiert wird.

Es liegt im Rahmen der Erfindung, als Initiator Verbindungen vom Dibenzyltyp 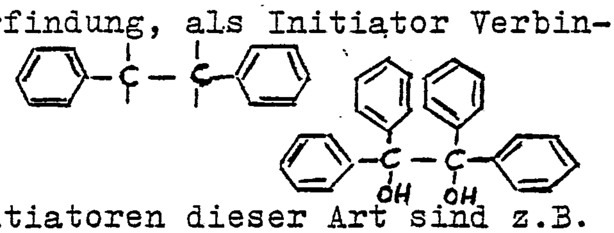 vorzugsweise Benzpinakole

zu verwenden. Weitere Initiatoren dieser Art sind z.B.

1,2 - Dimethyl-Tetraphenylethan

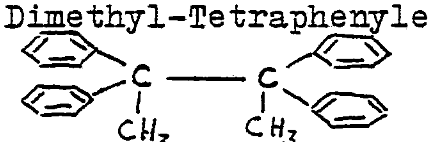

1,2 - Dimethoxy-Tetraphenylethan

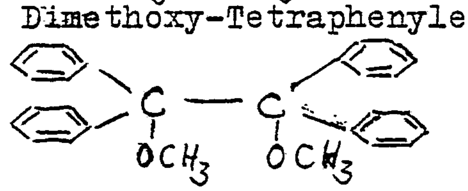

Tetraphenylbernsteinsäuredinitril

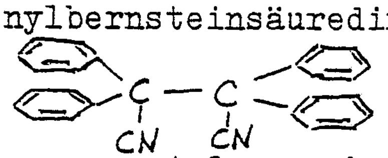

1,2 - Dicyano - 1,2 - carboxymethyl-1,2 dibenzyl-ethan

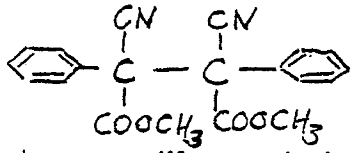

Benzpinakol hat gegenüber einigen dieser Initiatoren den Vorteil, daß es bereits bei tieferen Temperaturen zerfällt. Zwar ist aus dem Stand der Technik (Kunststoffe 68 (1978) Seite 553) bekannt, solche peroxidfreien Initiatoren vom Dibenzyltyp bei der Heißhärtung von ungesättigten Polyesterharzen zu verwenden, um im Gegensatz zu den Peroxiden eine explosionsartige Zersetzung zu vermeiden, doch ist ihr Einfluß auf die oxidationsempfindlichen Zusatzstoffe, insbesondere auf die Stabilität der Fluoreszenzfarbstoffe in Gießharzmassen gerade dann, wenn es sich um geringe Mengen handelt, bis heute noch nicht festgestellt worden.

Bisher ist bekannt, daß der Zerfall (oder Dissoziation) der C-C-Bindung des Initiators im Gegensatz zu den Peroxiden nicht durch Amine, Füllstoffe, Rost, Metallsalze, Pigmente beeinflußt wird, d.h. daß in diesen Fällen die Polymerisationsgeschwindigkeit unverändert bleibt. Der umgekehrte Einfluß auf eine Veränderung der Zusatzstoffe ist dabei jedoch nicht untersucht, da in den üblichen Anwendungsfällen geringfügige Veränderungen keine Rolle spielen und die Zusatzstoffe in großer Menge zugesetzt werden. Häufig beobachtete Effekte, wie eine Vergilbung von Polyesterharzen bei der Polymerisation sind jedoch in dieser Hinsicht nicht untersucht. Der beobachtete Effekt der Stabilität der in geringen Mengen zugesetzten Farbstoffe ist insofern überraschend, da Radikale im allgemeinen wenig selektiv sind. Man darf hierbei nicht

notwendigerweise von den Radikalen ausgehen, die z.B. (entsprechend H.G. Elias, Makromoleküle, Hüthig & Wepf-Verlag, Basel - Heidelberg, 3.Aufl. 1975, Seite 573) durch Dissoziation aus Benzpinakol entstehen:

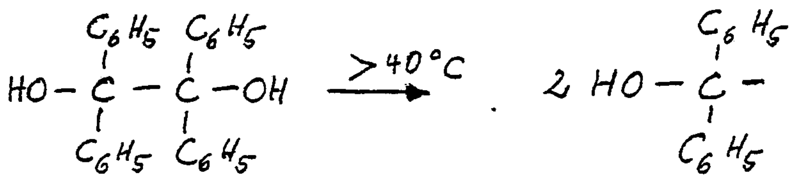


da diese durch Wasserstoffradikalübertragung weiterreagieren. Im Polymerisationsverlauf spielen zusätzlich auch andere Übertragungsreaktionen eine Rolle: zum Polymer, Lösungsmittel, in unserem Fall insbesondere auch auf Fluoreszenzfarbstoffe.

Ein Vergleich einer erfindungsgemäßen Versuchsprobe mit einem bekannten, durch Peroxid initiierten Produkt zeigt deutlich den technischen Vorteil der Erfindung. Die aus Polymethylmethacrylat-(PMMA) zu 60% und 40% Monomer bestehende Gießmasse Plexit M60 wurde mit 1% Massenanteil Benzpinakol in Gegenwart von ca. 0,5‰ Massenanteil eines Fluoreszenzfarbstoffes bei 100°C innerhalb von zwei Stunden polymerisiert. Bei Bestrahlung des fertigen Gießlings im sogenannten Xenotest-Gerät (Lebensdauertest) weist der Farbstoff eine dreimal so große Lebensdauer auf wie ein gleiches mit 1% Massenanteil an tertiärem Butylperbenzoat polymerisiertes Produkt.

Neben den erwähnten Polymerisationsstartern wirken auch oligomere Produkte im erfindungsgemäßen Sinne, so z.B. solche, die am Sauerstoffatom des Benzpinakols sylisiert sind, wobei diese Sylilgruppen auch Oligomere sein können. Andere oligomere Produkte werden durch Polymerisation mit Monomeren erst hergestellt und sind nachher noch startfähig:

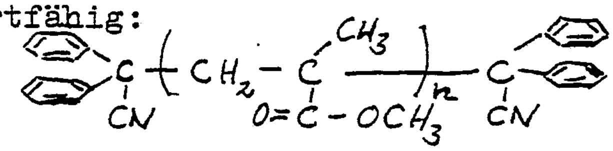

n = Zahl der Grundbausteine

Die Herstellung dieses Produktes erfolgt durch Polymerisation des Initiators Tetraphenylbernsteinsäuredinitril

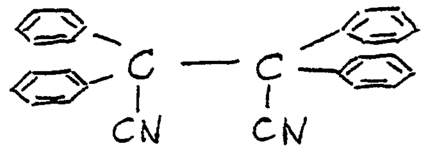

mit Methylmethacrylat und bleibt weiterhin ein Initiator mit etwa gleichen Starteigenschaften wie Benzpinakol.

Um eine evtl. auftretende Schädigung der Zusatzstoffe, insbesondere des Farbstoffzusatzes, durch Oxidation mit Sauerstoff, der in das fertig-polymerisierte Produkt eindringen kann, zu vermeiden, ist in einer Weiterbildung des Erfindungsgedankens vorgesehen, zusätzlich einen Sauerstoffquencher ($O_2$-Hemmer), vorzugsweise ein tertiäres Amin zuzusetzen. Gemäß einem Ausführungsbeispiel nach der Lehre der Erfindung eignet sich dazu Diazabicyclooctan oder Chinuclidinol. Diese Verbindungen werden in einem Bereich von 0,1% Massenanteilen mit dem C-C-labilen Initiator zur Polymerisation zugesetzt. Durch den Zusatz dieser Sauerstoffquencher in die Gießmasse wird die Polymerisationsgeschwindigkeit nicht beeinflußt. Auch hierbei ergibt sich eine wesentlich größere Lebensdauer der eingegossenen Farbstoffe im Xenotest-Gerät gegenüber der aus dem Stand der Technik bekannten peroxidischen Initiierung.

10 Patentansprüche

Patentansprüche

1. Verfahren zur Erhöhung der Stabilität von oxidationsempfindlichen organischen Zusatzstoffen, wie polaren Lösungsmitteln, nichtionogenen Seifen, Weichmachern, insbesondere aber von Fluoreszenzfarbstoffen, in radikalisch polymerisierbaren Systemen wie Gießmassen oder Gießharzen, bei deren Polymerisation und gegen äußere Einflüsse wie Licht- und Wärmeeinwirkung sowie gegen Oxidation im polymerisierten Zustand, dadurch gekennzeichnet, daß zur Polymerisation ein nicht-peroxidischer, C-C-labiler Initiator verwendet wird.

2. Verfahren nach Anspruch 1, dadurch gekennzeichnet, daß Verbindungen vom Dibenzyltyp verwendet werden.

3. Verfahren nach den Ansprüchen 1 und 2, dadurch gekennzeichnet, daß Benzpinakole verwendet werden.

4. Verfahren nach den Ansprüchen 1 bis 3, dadurch gekennzeichnet, daß als Initiator ein Sylilāther des Benzpinakols mit oligomeren Sylilgruppen verwendet wird.

5. Verfahren nach den Amsprüchen 1 bis 4, dadurch gekennzeichnet, daß der Initiator im Bereich von 1% Massenanteil zugesetzt wird.

6. Verfahren nach den Ansprüchen 1 bis 5, dadurch gekennzeichnet, daß zusätzlich ein Sauerstoffquencher, vorzugsweise ein tertiäres Amin, zugesetzt wird.

7. Verfahren nach Anspruch 6, dadurch gekennzeichnet, daß als tertiäres Amin Diazabicyclooctan oder Chinuclidinol zugesetzt wird.

8. Verfahren nach den Ansprüchen 6 und 7, dadurch gekennzeichnet, daß der Zusatz im Bereich von 0,1% Massenanteil liegt.

9. Verfahren nach den Ansprüchen 1 und 5 bis 8, dadurch gekennzeichnet, daß ein Initiator verwendet wird, der durch Polymerisation eines Initiators vom Dibenzyltyp mit einem Monomeren erst hergestellt wird.

10. Verwendung von nicht-peroxidischen, C-C-labilen Initiatoren, insbesondere vom Dibenzyltyp, zur Erhöhung der Stabilität von Fluoreszenzfarbstoffen in Konzentrationen von weniger als 1‰ in radikalisch polymerisierbaren Systemen.

Europäisches Patentamt

**EUROPÄISCHER RECHERCHENBERICHT**

0020922

Nummer der Anmeldung

EP 80 10 2193

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | NL - A - 71 10 624 (AKZO)<br>* Anspruch 1; Seite 5, Zeilen 2-4 *<br>-- | 1-5 |
| X | FR - A - 2 369 298 (BAYER)<br>* Anspruch 1; Seite 3; Seite 4, Zeilen 20-29; Seite 5 und Seite 6 *<br>-- | 1-8 |
| P | EP - A - 0 003 315 (BAYER)<br>* Ansprüche 1,5,6 *<br>-- | 1-5 |
| P | EP - A - 0 003 735 (BAYER)<br>* Anspruch 1 *<br>-- | 1-5 |
| A | DE - A - 2 545 451 (AKZO)<br>* Anspruch 1 *<br>-- | 1-5 |
| A | DE - A - 2 444 252 (AKZO)<br>* Anspruch 1 *<br>-- | 1-5 |
| A | DE - A - 2 164 482 (BAYER)<br>* Ansprüche 1,2,3; Seite 4, Spalte 2 und Spalte 3 *<br>-- | 1-5 |

./..

KLASSIFIKATION DER ANMELDUNG (Int. Cl.³)

C 08 K 5/00
C 08 F 4/00
C 09 B 67/42

RECHERCHIERTE SACHGEBIETE (Int. Cl.³)

C 08 K 5/00
5/01
5/05
C 08 F 4/00
C 09 B 67/42
C 08 F 299/04
C 08 L 33/12

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 05-09-1980 | DEPIJPER |

Europäisches Patentamt

**EUROPÄISCHER RECHERCHENBERICHT**

0020922

Nummer der Anmeldung

EP 80 10 2193



## EINSCHLÄGIGE DOKUMENTE

| Kategorie | Kennzeichnung des Dokuments mit Angabe, soweit erforderlich, der Maßgeblichen Teile | betrifft Anspruch | KLASSIFIKATION DER ANMELDUNG (Int. Cl.3) |
|---|---|---|---|
| A | FR - A - 1 385 958 (BAYER)<br>* Zusammenfassung 1 *<br>-- | 1-5 | |
| A | GB - A - 1 221 822 (BAKELITE)<br>* Ansprüche 1,2,3 und 13; Seite 1, Zeilen 16-26 *<br>-- | 1-5 | |
| A | GB - A - 1 041 040 (BAYER)<br>* Anspruch 1 *<br>----- | 1-5 | RECHERCHIERTE SACHGEBIETE (Int. Cl.3) |